# EUROPEAN PATENT SPECIFICATION

(11) **EP 0 986 852 B1**
(45) Date of publication and mention of the grant of the patent: **07.01.2009**
(21) Application number: 98926151.6
(22) Date of filing: 02.06.1998
(51) Int. Cl.: H02H 9/02

(54) **OVERCURRENT PROTECTION CIRCUIT**
ÜBERSTROMSCHUTZSCHALTUNG
CIRCUIT DE PROTECTION CONTRE LES SURINTENSITES

(30) Priority: 02.06.1997 US 867682; 28.10.1997 US 958808
(43) Date of publication of application: 22.03.2000
(73) Proprietor: TYCO Electronics Corporation, Menlo Park, CA 94025-1164 (US)
(72) Inventor: WYNN, Craig, Palo Alto, CA 94306 (US); NICKOLS, St. Elmo, III, Los Gatos, CA 95030 (US)
(74) Representative: Jay, Anthony William
(86) International application number: PCT/US1998/011123
(87) International publication number: WO 1998/056095

(56) References cited:
- WO-A-97/10609
- WO-A-97/10637

## Description

This invention relates to electrical circuit overcurrent protection.

PTC circuit protection devices are well known. Particularly useful PTC devices contain a PTC element which is composed of a PTC conductive polymer, i.e. a composition which comprises (1) an organic polymer, and (2) dispersed, or otherwise distributed, in the polymer, a particulate conductive filler, preferably carbon black. PTC conductive polymers and devices containing them are described, for example in U.S. Patent Nos. 4,237,441, 4,238,812, 4,315,237, 4,317,027, 4,426,633, 4,545,926, 4,689,475, 4,724,417, 4,774,024, 4,780,598, 4,800,253, 4,845,838, 4,857,880, 4,859,836, 4,907,340, 4,924,074, 4,935,156, 4,967,176, 5,049,850, 5,089,801 and 5,378,407.

International Publication No. WO 97/10637 discloses overcurrent protection systems which are particularly useful when a circuit is to be protected from relatively small overcurrents. In those systems, a control element and a circuit interruption element are placed in series with the load. The control element is functionally linked to the circuit interruption element, so that, when the current in the circuit exceeds a predetermined amount, the control element senses the overcurrent and causes the circuit interruption element to change from a relatively conductive state to a relatively nonconductive state (including a completely open state). In the development of systems of the type described in International Publication No. WO 97/10637, we have discovered novel electrical systems which can be connected between an electrical power supply and an electrical load to form an operating circuit, and which when so connected protect the circuit from overcurrents. The novel systems fall into two overlapping categories which will be described separately below as the first and second aspects of the invention. The systems of the invention comprise:
(1) a current sensing means having
   (a) a current deenergized state, when the current passing through it does not exceed a normal current, I_{NORMAL}, by a predetermined current amount, and
   (b) a current energized state, when the current passing through it has exceeded the normal current, I_{NORMAL}, by the predetermined current amount;
(2) a first circuit switch which is coupled with the current sensing means and which is is
   (a) closed when the current sensing means is in the current deenergized state, and
   (b) open when the current sensing means is in the current energized state;
(3) a voltage sensing means having
   (a) a voltage deenergized state when the voltage across the voltage sensing means does not exceed a predetermined voltage amount, and
   (b) a voltage energized state when the voltage across the voltage sensing means exceeds the predetermined voltage amount;
(4) a PTC device; and
(5) a second circuit switch which is coupled with the voltage sensing means and which is
   (a) closed when the voltage sensing means is in the voltage deenergized state, and
   (b) open when the voltage sensing means is in the voltage energized state;
      the first circuit switch and the PTC device being connected in parallel with each other; the second circuit switch being connected in series with the parallel combination of the first circuit switch and the PTC device; and
      the voltage sensing means being connected in parallel with the series combination of (i) the second switch and (ii) the parallel combination of the first circuit switch and the PTC device.

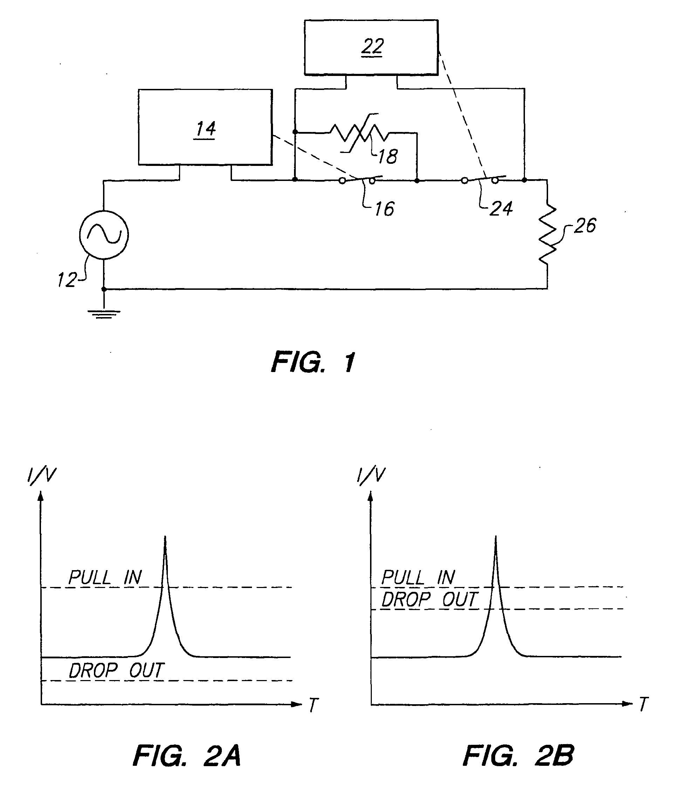

An example of a circuit including such a system is shown in FIG. 1 of the accompanying drawings. The novel system is similar to the system shown in FIG. 2c of International Publication No. WO 97/10637, but, has the advantage that opening of the second circuit switch transfers the system voltage to the voltage sensing means. This ensures that the second circuit switch continues to open and remains open. The system shown in FIG. 2c of International Publication No. WO 97/10637 has the disadvantage that opening of the second circuit switch removes the voltage from the voltage sensing means. This may cause the contacts of a conventional relay to "chatter" and necessitate the use of some measure to prevent this, e.g. the use of a make-before-break relay.

The level (current or voltage, as the case may be) at which a relay energizes (e.g., switches from a normally open position to a closed position, or from a normally closed position to an open position, as the case may be) is often referred to as the "pull-in" level. Similarly, the level (current or voltage, as the case may be) at which a relay deenergizes (e.g. switches from a closed position to a normally open position, or from an open position to a normally closed position, as the case may be) is often referred to as the "drop-out" level.

It is preferred in a system of this kind that the current sensing relay (or other sensing means) have a pull-in level which is not far above the maximum operating current level (e.g., not more than 5 times, particularly not more than 3 times, especially not more than 2 times) to provide the desired overcurrent protection. It is also preferred in a system of this kind that the current sensing relay (or other sensing means) have a drop-out level which is not far above the maximum operating current level of the circuit to avoid triggering the protection system on short transient overcurrents. This is illustrated in the curves shown in FIGs. **2A** and **2B****.** In the curve shown in FIG. **2A****,** the drop-out level of the current sensing means is below the normal operating level of the circuit. Thus, in the event of a transient, such as is depicted in FIG. **2A****,** the current sensing means will pull-in when the transient exceeds the pull-in level, but, since the normal operating current level is above the drop-out level, the current sensing means will not drop-out, and thus will remain energized. In protection systems of this kind, such would cause the PTC device the heat up and increase its resistance, thereby causing the voltage sensing relay (or other second circuit switch) to open.

In order to avoid this situation, i.e. to prevent triggering on such transients, the pull-in and drop-out levels of the current sensing relay may have relationships as depicted in FIG. **2B****.** In the curve shown in FIG. **2B****,** the drop-out level of the current sensing means is above the normal operating level of the circuit. Thus, in the event of a transient, such as is depicted in FIG. **2B****,** the current sensing relay will pull in when the transient exceeds the pull-in level, but will then quickly drop-out when the current falls back below the drop-out level. With the current sensing relay pulled-in for a very brief time, the PTC device will not heat up sufficiently to cause the voltage sensing relay to open. Hence, the protection system should not trigger on transients.

It has been found that there is a danger that, after the current sensing relay contacts have opened, the PTC device will reduce the current to a level below the drop-out level of the current sensing relay before the voltage across the PTC device reaches the level required to pull-in the voltage sensing relay. With the current sensing relay dropping-out, the contacts reclose, thereby restoring the fault current, and the cycle of opening and reclosing of the current sensing relay contacts may repeat continuously. This "bussing" or "chattering" can cause the contacts to fuse together. This problem cannot be overcome by using a single voltage sensing relay having a sufficiently low pull in voltage (while also meeting the drop-out level requirement described above) because the coil in such a relay must be made with very fine wire which can melt when exposed to the normal system voltage or to surges induced by lightning or by inductive coupling to switching transients in parallel AC power lines.

Preferred embodiments of the invention provide a solution to this problem.

In one embodiment, the voltage sensing relay is a latching relay with a pull-in voltage low enough to ensure that the voltage contacts open before the current in the circuit drops below the drop-out current of the current relay; and a second latching relay is placed in parallel with the first relay, the second relay having a higher pull-in voltage than the first relay and controlling contacts which disconnect both relays. At least one; and preferably both, of the latching relays are DC relays, because latching DC relays are more readily available than latching AC relays. This solution not only prevents chattering of the current relay contacts, but also isolates the downstream circuit and the voltage relays; this makes the circuit safer for field personnel and ensures that neither the protection system nor the other circuit components can be damaged by lightning or other surges.

Another, less preferred, embodiment is to add a plurality of additional voltage relays, each in parallel with the voltage relay and each other, and with progressively higher pull-in voltages. The voltage relay with the highest pull-in voltage has a coil which will not be damaged by the normal system voltage. Each additional voltage relay controls a switch which will completely disconnect the "original" voltage relay and the additional voltage relay or relays having a lower pull-in voltage.

The invention is illustrated in Figures 1 to 5 of the accompanying drawings, in which FIGs. 1, 3, 4 and 5 are circuit diagrams of circuits in accordance with the invention, and FIGs. 2a and 2b are curves which illustrate the effect of different pull-in and drop-out levels of the current sensing relay in response to a transient condition.

FIG. 1 shows a circuit which includes a PTC device **18,** a current sensing relay **14** and a first voltage sensing relay **22.** The current sensing relay **14** is coupled to a first set of contacts **16,** and the first voltage sensing relay **22** is coupled to a second set of contacts **24.** The current sensing relay **14** performs the function of sensing the current in the circuit. When it detects an overcurrent condition, it opens the first set of contacts **16,** thus diverting the current to the PTC device **18.** Normally the resistance of the PTC device **18** is smaller than the resistance of the first voltage sensing relay **22,** so most of the current flows through the PTC device **18.** The PTC device **18** increases in resistance, thereby limiting the current in the circuit **10,** and applies a voltage across the first voltage sensing relay **22.** When the voltage across the first voltage sensing relay **22** reaches the level necessary to energize the first voltage sensing relay **22,** the first voltage sensing relay **22** opens the second set of contacts **24.** This transfers the system voltage to the voltage relay coil, thus ensuring that the contacts **24** continue to open and remain open so long as the voltage coil is energized. The current continues to flow through the load and the first voltage sensing relay **22,** but is limited by the resistance of voltage relay **22.** The circuit can be reset by interrupting the current through the voltage coil, which can be done by means of a manual reset mechanism or a reset coil which can be operated remotely (neither being shown in FIG. 1).

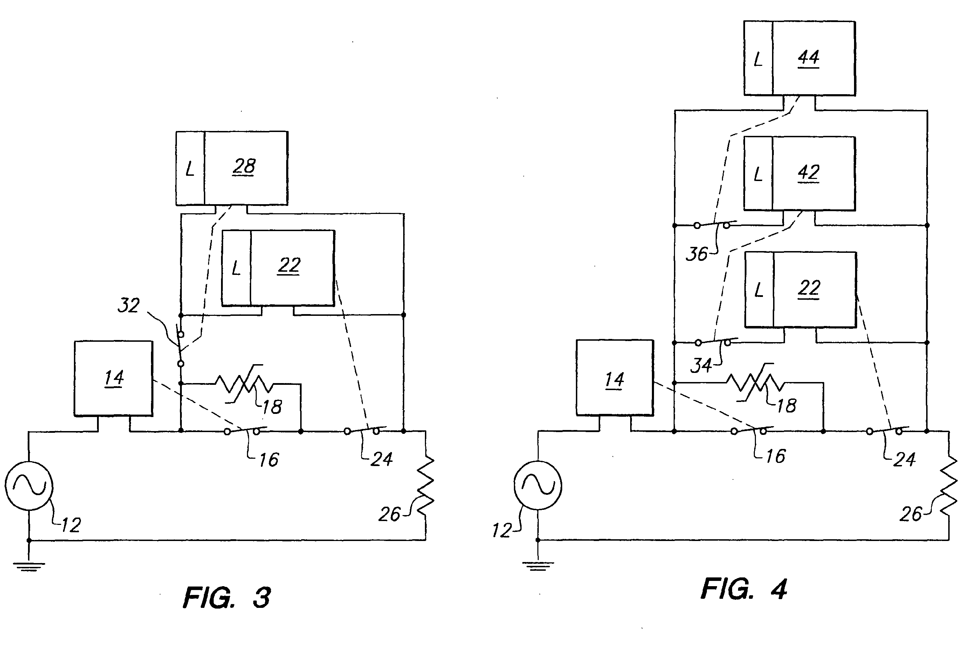

The circuit in FIG. **3** employs two voltage sensing relays **22,28** coupled in parallel. A first latching voltage sensing relay **22** has a pull-in voltage low enough to ensure that the second set of contacts **24** open before the current in the circuit drops below the drop-out level of the current sensing relay **14.** A second voltage sensing relay **28** has a higher pull-in voltage than the first voltage sensing relay **22** and controls a third set of contacts **32** which disconnects both voltage sensing relays **22,28** from the circuit.

An alternative circuit is shown in FIG. **4****,** in which three (or more, three shown in FIG. **4****)** voltage sensing relays **22,42,44** are coupled in parallel. Each succeeding voltage sensing relay coil has a higher pull-in voltage than the previous, and, as the voltage across the parallel assembly increases, the relay coils energize in sequence, with each succeeding relay disconnecting the previous relay from the circuit. Thus, only that last relay in the assembly need carry the full system voltage.

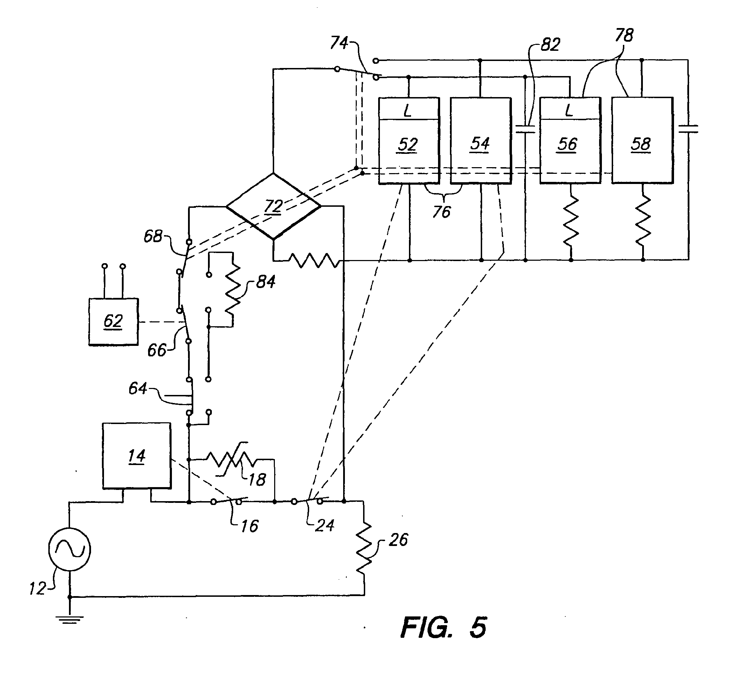

In the circuit shown in FIG. **5****,** a first latching DC voltage relay **76** is used in place of the voltage relay **22** of FIG. **3****.** The first latching DC voltage relay **76** has two coils **52,54,** a first set coil **52** for switching the first latching DC voltage relay contacts **24** to the open position, and a first reset coil **54** for returning the first latching DC voltage relay contacts **24** to the closed position. The bridge circuit **72** converts AC to rectified DC. When the voltage across the PTC device **18** increases to the pull-in voltage of the first set coil **52,** the first set coil **52** energizes causing the first latching DC voltage relay contacts **24** to switch to the open circuit position. The first latching DC voltage relay **76** latches in this position.

A second latching DC voltage relay **78** also has two coils **56,58,** a second set coil **56** for switching two sets of contacts **68,74,** and a second reset coil **58** for resetting the two sets of contacts **68,74.** The second set coil **56** has a higher pull-in voltage than the first set coil **52.** When the first latching DC voltage relay contacts open **24,** the voltage across the bridge circuit **72** rises. As the voltage rises, the pull-in voltage of the second set coil **56** is reached, and the second set coil **56** energizes. The two sets of contacts **68, 74** switch, disconnecting the bridge circuit **72** from the AC input, and thereby deenergizing the set coils **52,56** of both relays. A first capacitor **82** completes the switching action after the system voltage has been removed.

At the conclusion of the switching event, the contacts **24,68,74** of both voltage sensing relays **76,78** are open, and zero current flows from input to output. No power is dissipated when the circuit is in the tripped state, and the downstream load is electrically isolated from the system voltage. This presents a less hazardous condition for field personnel, and protects delicate coil windings from lightning and other transient sources.

When the two sets of contacts **68,74** switch to their set position, the first and second reset coils **54,58** are connected to the bridge circuit **72.** The circuit may be reset manually, for example by means of a push button **64,** or remotely by means of an additional relay coil **62** and associated contacts **66.** Resetting by either means connects power through the bridge circuit **72** to the first and second reset coils **54,58** A resistor **84** may be included to prevent an overvoltage condition which might cause arcing or damage to the relay coils.

The specific current sensing means disclosed by way of preferred example in the above description is a current sensing relay. We have found that under some circumstances, a current sensing relay is not the preferred current sensing means. For example, if the fault condition produces intermittent or repetitive current surges, this can result in the current relay being rapidly energized and deenergized in a way which is not satisfactory. We have discovered an alternative current sensing means, which can be used in all the circuits disclosed in the above description, and is particularly useful when there is a possibility that the fault condition will produce intermittent or repetitive current surges. This current sensing means is responsive not only to the size, but also the duration of the current (for example so that it will not convert the first circuit switch from the closed to the open position unless the current exceeds a predetermined level for more than 1 millisecond) and thus ensures that the current to the load is cut off or reduced only when some function of the size and the duration of the current exceeds a predetermined value.

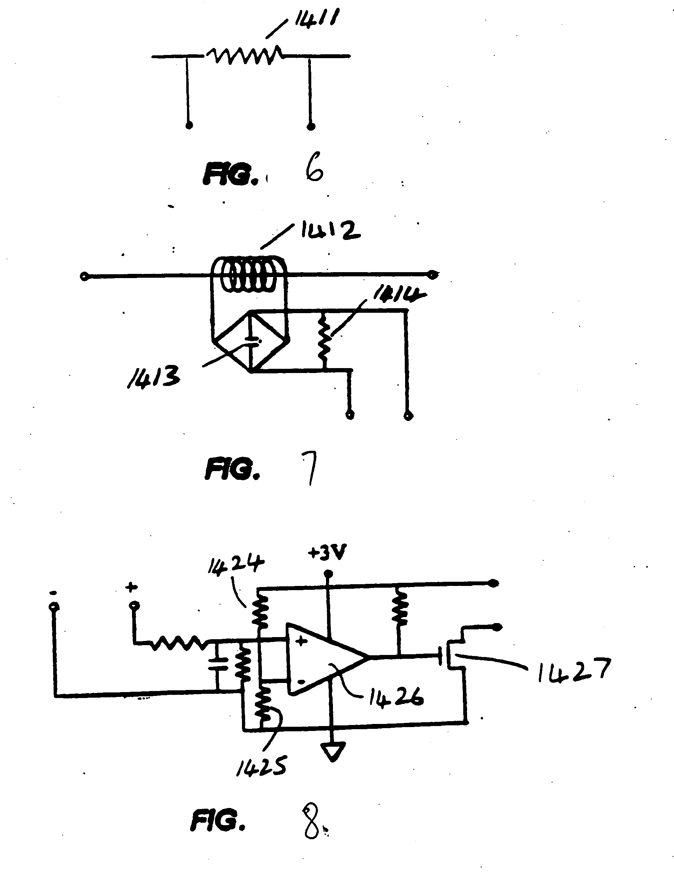

Figures 6, 7 and 8 are circuit diagrams of parts of circuits of the invention.

In one preferred embodiment of the invention, the current sensing means comprises
(i) a voltage output which provides a signal voltage related to said function of the current passing through the load;
(ii) a voltage source which supplies a reference voltage; and
(iii) a comparator which makes a comparison between the signal voltage and the reference voltage, and provides an output which reflects the result of that comparison.

The signal voltage can for example be the voltage across a resistor through which flows a current proportional to the current through the load, or the voltage from a current transformer coupled to a conductor through which flows a current proportional to the current through the load, or the voltage from a magneto resistive device coupled to a conductor through which flows a current proportional to the current through the load.

In one a embodiment of the invention, the function of the current passing through the load is simply the magnitude of that current (subject to the inherent property of all current sensing means, namely that an overcurrent pulse can be so short that it is not recognized by the current sensing means as having a magnitude greater than a predetermined minimum). In another embodiment, the function is a function of (i) the size of the current passing through the load, and (ii) the duration of the current passing through the load, with the function being something other than that inherent in the current sensing means itself (for example, a function such that the predetermined value cannot be exceeded when the duration of the overcurrent is less than 1 millisecond, or less than 25 milliseconds, or less than 50 milliseconds, or less than 100 milliseconds). Alternatively or additionally, the current sensing means can be one which can be programmed to change the predetermined value and/or which is adaptive, i.e. which observes the current (or another variable) over a period and sets the predetermined value in response to the current (or the other variable) during the period of observation.

In various embodiments of the invention, one of the first and second switches is a switch which latches in the open position and the other is a non-latching switch; or both are latching switches; or both are non-latching switches. In one embodiment, the components (1) to (5) are connected in accordance with paragraph (A) above, and the second circuit switch does not latch in the open state when it is converted into the open state. This has the advantage that if the cause of the overcurrent is removed, the circuit reverts to normal operation. In another embodiment, the components (1) to (5) are connected in accordance with paragraph (B) above, and each of the first and second circuit switches latches in the open state when it is converted from the closed state to the open state. This has the advantage that no current flows through the load after the overcurrent has triggered the protection system, but the disadvantage that the switches must be reset, even after the cause of the overcurrent has been removed, before normal operation can be restored. However, when the system employs a current sensing means which has a reference voltage, and/or is programmable and/or is adaptive, it is not difficult to design a system in which the switches can be reset remotely, e.g. by means of an electrical signal, thus removing the need for manual resetting.

This type of protection may be used in cases where the system voltage does not drop below the operating voltage of the relays in the case of an overcurrent fault, e.g., between a utility electric supply and a downstream power supply, but should not be used, for example, on the secondary side of transformers whose output voltage may collapse when shorted.

Figures 6 and 7 show circuit diagrams for the voltage outputs. In Figure 6, the signal voltage is the voltage across a precisely know resistor **1411.** In Figure 7, the voltage output comprises a current transformer **1412** coupled to a conductor which carries the circuit current, and the induced voltage is supplied to a circuit containing a capacitor **1413** and a resistor **1414** which average the current over a desired time period to provide the desired voltage signal.

Figure 8 shows a circuit diagram for a comparator The comparator makes use of a 3-volt power supply (or a similar low voltage) which may be derived from the principal power source **12** or from a battery. Resistors **1424** and **1425** determine the reference voltage for an op-amp **1426**; if desired one or both of resistors **1424** and **1425** can be a variable resistor, so that the reference voltage can be changed if desired. When the signal voltage exceeds the reference voltage, the op-amp turns on a transistor FET, causing current to flow through relay coil **143** (which must operate with the reference voltage).

## Claims

1. An electrical system which can be connected between an electrical power supply (12) and an electrical load to form an operating circuit, and which when so connected protects the circuit from overcurrents, the system having a normal operating condition and a fault condition, and comprising :
(1) a current sensing means (14) having
(a) a current deenergized state, when the current passing through it does not exceed a normal current, I_{NORMAL}, by a predetermined current amount, and
(b) a current energized state, when the current passing through it has exceeded the normal current, I_{NORMAL}, by the predetermined current amount;
(2) a first circuit switch (16) which is coupled with the current sensing means and which is
(a) closed when the current sensing means is in the current deenergized state, and
(b) open when the current sensing means is in the current energized state;
(3) a voltage sensing means (22) having
(a) a voltage deenergized state when the voltage across the voltage sensing means does not exceed a predetermined voltage amount, and
(b) a voltage energized state when the voltage across the voltage sensing means exceeds the predetermined voltage amount;
(4) a PTC device (18) and
(5) a second circuit switch (24) which is coupled with the voltage sensing means and which is
(a) closed when the voltage sensing means is in the voltage deenergized state, and
(b) open when the voltage sensing means is in the voltage energized state;
the first circuit switch and the PTC device being connected in parallel with each other; the second circuit switch being connected in series with the parallel combination of the first circuit switch and the PTC device; and **characterised in that** the voltage sensing means are connected in parallel with the series combination of
(i) the second switch and
(ii) the parallel combination of the first circuit switch and the PTC device.

2. A system according to claim 1 wherein:
a. the current sensing means comprises a current sensing relay coil;
b. the first circuit switch comprises a first set of contacts (16) coupled with the current sensing relay coil;
c. the voltage sensing means comprises a voltage sensing relay coil; and
d. the second circuit switch comprises a second set of contacts (24) coupled with the voltage sensing relay coil.

3. A system according to claim 2 wherein the combination of the current sensing relay coil and the first set of contacts has a drop-out current which is above I_{NORMAL} and a pull-in current which is not more than P times I_{NORMAL}, where P is 3.

4. A system according to claim 2 or 3 in which said voltage relay coil and said second set of contacts have a first pull-in voltage and latch open when the voltage across the coil exceeds the first pull-in voltage; and which further comprises
(6) an auxiliary voltage sensing relay coil which is connected in parallel with said voltage sensing relay coil, and
(7) an auxiliary set of contacts which is
(a) coupled with the auxiliary voltage sensing relay coil, and
(b) when it is open, disconnects said voltage relay coil and the auxiliary voltage sensing relay coil;
the auxiliary voltage sensing relay coil and the auxiliary set of contacts having a second pull-in voltage which is higher than the first pull-in voltage and latching open when the voltage across the auxiliary voltage sensing relay coil exceeds the second pull-in voltage.

5. A system according to claim 3 which further comprises a plurality of additional voltage relay coils, each having an associated set of contacts coupled thereto; the additional voltage coils and the associated sets of contacts having different pull-in voltages, each of the pull-in voltages being higher than the pull-in voltage of said voltage relay coil and said second set of contacts; and each of the associated sets of contacts, when open, completely disconnecting said voltage relay and any additional voltage coil having a lower pull-in voltage.

6. A system according to claim 1 wherein the current sensing means comprises
(i) a voltage output which provides a signal voltage related to said function;
(ii) a voltage source which supplies a reference voltage; and
(iii) a comparator which makes a comparison between the signal voltage and the reference voltage, and provides an output which reflects the result of that comparison.

7. A system according to claim 6 wherein the signal voltage is the voltage across a resistor through which flows a current proportional to the current through the load.

8. A system according to any one of claims 1, 6 or 7 wherein the current sensing means comprises (a) a current transformer coupled to a conductor through which flows a current proportional to the current through the load, or (b) a magneto resistive device coupled to a conductor through which flows a current proportional to the current through the load.

9. An electrical circuit which comprises an electrical power supply, an electrical load and an electrical protection system as defined in any one of the preceding claims.

## Patentansprüche

1. Elektrisches System, das zwischen einer elektrischen Spannungsversorgung (12) und einer elektrischen Last angeschlossen werden kann, um eine Betriebsschaltung zu bilden, und das, wenn es so angeschlossen ist, die Schaltung vor Überströmen schützt, wobei das System einen normalen Betriebszustand und einen Fehlerzustand aufweist, und umfassend:
(1) ein Stromerfassungsmittel (14) mit
(a) einem Strom-Ausschaltzustand, wenn der **dadurch** fließende Strom einen normalen Strom, I_{NORMAL}, nicht um einen vorbestimmten Strombetrag überschreitet, und
(b) einem Strom-Einschaltzustand, wenn der **dadurch** fließende Strom den normalen Strom, I_{NORMAL}, um den vorbestimmten Strombetrag überschritten hat;
(2) einen ersten Schaltungsschalter (16), der an das Stromerfassungsmittel gekoppelt ist und der
(a) geschlossen ist, wenn das Stromerfassungsmittel in dem Strom-Ausschaltzustand ist, und
(b) geöffnet ist, wenn das Stromerfassungsmittel in dem Strom-Einschaltzustand ist;
(3) ein Spannungserfassungsmittel (22) mit
(a) einem Spannungs-Ausschaltzustand, wenn die Spannung über dem Spannungserfassungsmittel einen vorbestimmten Spannungsbetrag nicht überschreitet, und
(b) einem Spannungs-Einschaltzustand, wenn die Spannung über dem Spannungserfassungsmittel den vorbestimmten Spannungsbetrag überschreitet;
(4) eine PTC-Vorrichtung (18) und
(5) einen zweiten Schaltungsschalter (24), der an das Spannungserfassungsmittel gekoppelt ist und der
(a) geschlossen ist, wenn das Spannungserfassungsmittel in dem Spannungs-Ausschaltzustand ist, und
(b) geöffnet ist, wenn das Spannungserfassungsmittel in dem Spannungs-Einschaltzustand ist;
wobei der erste Schaltungsschalter und die PTC-Vorrichtung in Parallelschaltung miteinander verbunden sind;
der zweite Schaltungsschalter in Reihenschaltung mit der Parallelkombination des ersten Schaltungsschalters und der PTC-Vorrichtung verbunden ist;
und **dadurch gekennzeichnet, dass** die Spannungserfassungsmittel in Parallelschaltung mit der Reihenkombination verbunden sind von
(i) dem zweiten Schalter und
(ii) der Parallelkombination des ersten Schaltungsschalters und der PTC-Vorrichtung.

2. System nach Anspruch 1, wobei:
a. das Stromerfassungsmittel eine Stromerfassungs-Relaisspule umfasst;
b. der erste Schaltungsschalter einen ersten Satz von Kontakten (16) umfasst, die an die Stromerfassungs-Relaisspule gekoppelt sind;
c. das Spannungserfassungsmittel eine Spannungserfassungs-Relaisspule umfasst; und
d. der zweite Schaltungsschalter einen zweiten Satz von Kontakten (24) umfasst, die an die Spannungserfassungs-Relaisspule gekoppelt sind.

3. System nach Anspruch 2, wobei die Kombination der Stromerfassungs-Relaisspule und des ersten Satzes von Kontakten einen Abfallstrom aufweist, der über I_{NORMAL} liegt, und einen Anzugsstrom, der nicht mehr als P mal I_{NORMAL} beträgt, wobei P gleich 3 ist.

4. System nach Anspruch 2 oder 3, wobei die Spannungs-Relaisspule und der zweite Satz von Kontakten eine erste Anzugsspannung aufweisen und im geöffneten Zustand verriegeln, wenn die Spannung über der Spule die erste Anzugsspannung überschreitet; und das weiter umfasst
(6) eine Hilfs-Spannungserfassungs-Relaisspule, die in Parallelschaltung mit der Spannungserfassungs-Relaisspule verbunden ist, und
(7) einen Hilfs-Satz von Kontakten, der
(a) an die Hilfs-Spannungserfassungs-Relaisspule gekoppelt ist, und
(b) wenn er geöffnet ist, die Spannungs-Relaisspule und die Hilfs-Spannungserfassungs-Relaisspule trennt;
wobei die Hilfs-Spannungserfassungs-Relaisspule und der Hilfs-Satz von Kontakten eine zweite Anzugsspannung aufweisen, die höher als die erste Anzugsspannung ist und im geöffneten Zustand verriegeln, wenn die Spannung über der Hilfs-Spannungserfassungs-Relaisspule die zweite Anzugsspannung überschreitet.

5. System nach Anspruch 3, das weiter eine Vielzahl von zusätzlichen Spannungs-Relaisspulen umfasst, die jede einen assoziierten Satz von daran gekoppelten Kontakten aufweisen; wobei die zusätzlichen Spannungsspulen und die assoziierten Sätze von Kontakten verschiedene Anzugsspannungen aufweisen, jede der Anzugsspannungen höher als die Anzugsspannung der Spannungs-Relaisspule und des zweiten Satzes von Kontakten ist; und jedes der assoziierten Sätze von Kontakten, wenn geöffnet, das Spannungsrelais und jede zusätzliche Spannungsspule mit einer niedrigeren Anzugsspannung vollständig abtrennen.

6. System nach Anspruch 1, wobei das Stromerfassungsmittel umfasst
(i) einen Spannungsausgang, der eine Signalspannung bereitstellt, die mit der Funktion in Zusammenhang steht;
(ii) eine Spannungsquelle, die eine Referenzspannung zuführt; und
(iii) einen Komparator, der einen Vergleich zwischen der Signalspannung und der Referenzspannung durchführt und einen Ausgang bereitstellt, der das Ergebnis dieses Vergleichs reflektiert.

7. System nach Anspruch 6, wobei die Signalspannung die Spannung über einem Widerstand ist, durch den ein Strom fließt, der proportional zu dem Strom durch die Last ist.

8. System nach einem der Ansprüche 1, 6 oder 7, wobei das Stromerfassungsmittel (a) einen Stromtransformator umfasst, der an einen Leiter gekoppelt ist, durch den ein Strom fließt, der proportional zu dem Strom durch die Last ist, oder (b) eine Magnetwiderstandsvorrichtung, die an einen Leiter gekoppelt ist, durch den ein Strom fließt, der proportional zu dem Strom durch die Last ist.

9. Elektrische Schaltung, die eine elektrische Spannungsversorgung, eine elektrische Last und ein elektrisches Schutzsystem, wie in einem der vorstehenden Ansprüche definiert, umfasst.

## Revendications

1. Système électrique qui peut être connecté entre une alimentation électrique (12) et une charge électrique pour former un circuit d'actionnement, et qui, lorsqu'il est ainsi connecté, protège le circuit de surintensités, le système ayant une condition de fonctionnement normal et une condition de défaut, et comprenant :
(1) des moyens de détection de courant (14) ayant
(a) un état non alimenté en courant, lorsque le courant qui les traverse ne dépasse pas un courant normal, I_{NORMAL}, d'une quantité de courant prédéterminée, et
(b) un état alimenté en courant, lorsque le courant qui les traverse a dépassé le courant normal, I_{NORMAL}, de la quantité de courant prédéterminée ;
(2) un premier commutateur de circuit (16) qui est couplé aux moyens de détection de courant et qui est
(a) fermé lorsque les moyens de détection de courant sont dans l'état non alimenté en courant, et
(b) ouvert lorsque les moyens de détection de courant sont dans l'état alimenté en courant ;
(3) des moyens de détection de tension (22) ayant
(a) un état non alimenté en tension lorsque la tension aux bornes des moyens de détection de tension ne dépasse pas une quantité de tension prédéterminée, et
(b) un état alimenté en tension lorsque la tension aux bornes des moyens de détection de tension dépasse la quantité de tension prédéterminée ;
(4) un dispositif PTC (18), et
(5) un deuxième commutateur de circuit (24) qui est couplé aux moyens de détection de tension et qui est
(a) fermé lorsque les moyens de détection de tension sont dans l'état non alimenté en tension, et
(b) ouvert lorsque les moyens de détection de tension sont dans l'état alimenté en tension ;
le premier commutateur de circuit et le dispositif PTC étant connectés en parallèle l'un à l'autre ;
le deuxième commutateur de circuit étant connecté en série avec la combinaison parallèle du premier commutateur de circuit et du dispositif PTC ; et **caractérisé en ce que**
les moyens de détection de tension sont connectés en parallèle à la combinaison série
(i) du deuxième commutateur et
(ii) de la combinaison parallèle du premier commutateur de circuit et du dispositif PTC.

2. Système selon la revendication 1, dans lequel :
a. les moyens de détection de courant comprennent une bobine de relais de détection de courant ;
b. le premier commutateur de circuit comprend un premier ensemble de contacts (16) couplés à la bobine de relais de détection de courant ;
c. les moyens de détection de tension comprennent une bobine de relais de détection de tension ; et
d. le deuxième commutateur de circuit comprend un deuxième ensemble de contacts (24) couplés à la bobine de relais de détection de tension.

3. Système selon la revendication 2, dans lequel la combinaison de la bobine de relais de détection de courant et du premier ensemble de contacts a un courant de relâchement qui est supérieur à I_{NORMAL} et un courant d'accrochage qui est inférieur ou égal à P fois I_{NORMAL}, où P est égal à 3.

4. Système selon la revendication 2 ou 3, dans lequel ladite bobine de relais de tension et ledit deuxième ensemble de contacts ont une première tension d'accrochage et se verrouillent dans l'état ouvert lorsque la tension aux bornes de la bobine dépasse la première tension d'accrochage ; et qui comprend en outre
(6) une bobine de relais de détection de tension auxiliaire qui est connectée en parallèle avec ladite bobine de relais de détection de tension, et
(7) un ensemble auxiliaire de contacts qui
(a) sont couplés à la bobine de relais de détection de tension auxiliaire, et
(b) lorsqu'ils sont ouverts, déconnectent ladite bobine de relais de tension et la bobine de relais de détection de tension auxiliaire ;
la bobine de relais de détection de tension auxiliaire et l'ensemble auxiliaire de contacts ayant une deuxième tension d'accrochage qui est supérieure à la première tension d'accrochage et se verrouillant dans l'état ouvert lorsque la tension aux bornes de la bobine de relais de détection de tension auxiliaire dépasse la deuxième tension d'accrochage.

5. Système selon la revendication 3, qui comprend en outre une pluralité de bobines de relais de tension supplémentaires, à chacune desquelles un ensemble associé de contacts est couplé ; les bobines de tension supplémentaires et les ensembles associés de contacts ayant différentes tensions d'accrochage, chacune des tensions d'accrochage étant supérieure à la tension d'accrochage de ladite bobine de relais de tension et dudit deuxième ensemble de contacts ; et chacun des ensembles de contacts associés, lorsqu'ils sont ouverts, déconnecte complètement ledit relais de tension et toute bobine de tension supplémentaire ayant une tension d'accrochage plus faible.

6. Système selon la revendication 1, dans lequel les moyens de détection de courant comprennent
(i) une sortie de tension qui délivre une tension de signal associée à ladite fonction ;
(ii) une source de tension qui délivre une tension de référence ; et
(iii) un comparateur qui effectue une comparaison entre la tension de signal et la tension de référence, et qui délivre une sortie qui reflète le résultat de cette comparaison.

7. Système selon la revendication 6, dans lequel la tension de signal est la tension aux bornes d'une résistance à travers laquelle un courant proportionnel au courant circulant à travers la charge circule.

8. Système selon l'une quelconque des revendications 1, 6 ou 7, dans lequel les moyens de détection de courant comprennent (a) un transformateur de courant couplé à un conducteur à travers lequel un courant proportionnel au courant circulant à travers la charge circule, ou (b) un dispositif magnétorésistif couplé à un conducteur à travers lequel un courant proportionnel au courant circulant à travers la charge circule.

9. Circuit électrique qui comprend une alimentation électrique, une charge électrique et un système de protection électrique tels que définis dans l'une des revendications précédentes.
